# EUROPÄISCHE PATENTSCHRIFT

(11) **EP 3 183 186 B1**
(45) Veröffentlichungstag und Bekanntmachung des Hinweises auf die Patenterteilung: **10.10.2018**
(21) Anmeldenummer: 15752980.1
(22) Anmeldetag: 05.08.2015
(51) Int. Cl.: B65D 83/00

(54) **KLEBESTIFT MIT PIN**
ADHESIVE STICK WITH PIN
BÂTON DE COLLE AVEC ERGOT

(30) Priorität: 22.08.2014 DE 102014216724
(43) Veröffentlichungstag der Anmeldung: 28.06.2017
(73) Patentinhaber: Henkel AG & Co. KGaA, 40589 Düsseldorf (DE)
(72) Erfinder: RUSHE, Peter, 40589 Düsseldorf (DE); LEDESMA, Guillermo, 36764 Salamanca, Guanajuato (MX)
(86) Internationale Anmeldenummer: PCT/EP2015/068106
(87) Internationale Veröffentlichungsnummer: WO 2016/026703

(56) Entgegenhaltungen:
- WO-A1-02/38003
- DE-A1- 2 139 123
- US-A- 5 733 058

## Beschreibung

Die Erfindung betrifft einen Klebestift mit einem Klebstoffkörper, einem Drehgriff mit Spindel und mit einem Kolben, der mit der Spindel in Eingriff steht und dazu dient, bei Drehung des Drehgriffs den Klebstoffkörper aus einer eingefahrenen Position zu drücken.

Ein derartiger Klebestift ist beispielsweise aus der DE 10 2011 121 300 A1 bekannt. Der Klebstoffkörper ist dort zylindrisch ausgebildet und befindet bei eingefahrener Position vollständig in einer feststehenden Hülse. Um ein Austrocknen des Klebstoffes zu vermeiden, lässt sich auf die Hülse eine Kappe stecken, wenn sich der Klebstoffkörper in der eingefahrenen Position befindet.

Beim Klebestift der DE 10 2011 121 300 A1 ist die Spindel mittig innerhalb des Klebstoffkörpers angeordnet, so dass eine Längsachse der Spindel und eine Längsachse des zylindrischen Klebstoffkörpers zusammenfallen. In eingefahrenen Position und, soweit der Klebstoffkörper nicht schon durch vormaligen Gebrauch abgetragen ist, weist der Klebstoffkörper an einem oberen Ende eine geschlossene Stirnfläche auf, da die Spindel sich nicht über die gesamte Länge des zylindrischen Klebstoffkörpers erstreckt.

Wird nun durch Drehung des Drehgriffs die Spindel gedreht, drückt der Kolben den Klebstoffkörper aus der eingefahrenen Position entlang der Längsachse der Spindel. Der Klebstoffkörper steht dann zumindest teilweise aus der Hülse hervor, so dass Klebstoff beispielsweise auf ein Blatt Papier aufgetragen werden kann.
Bezogen auf den Klebstoffkörper wird die sich zwar drehende, aber ortsfeste Spindel aus dem Klebstoffkörper beim Herausfahren des Klebstoffkörpers geschraubt. Es entsteht somit innerhalb des Klebstoffkörpers ein Hohlraum, in dem sich ein Unterdruck aufbaut. Der Unterdruck kann dabei das Herausfahren des Klebstoffkörpers erschweren. Wird der Unterdruck in dem so entstandenen Hohlraum zu groß, reißt die geschlossene Stirnfläche des Klebstoffkörpers ein, so dass Luft durch Risse im Klebstoff in den Hohlraum dringen kann.

Bei der Benutzung des Klebestifts wird üblicherweise der Klebstoffkörper mit seiner oberseitigen Stirnfläche über eine Fläche (zum Beispiel ein Blatt Papier) gestrichen, auf der Klebstoff aufgetragen werden soll. Dabei kann sich die zuvor eingerissene Stirnfläche wieder schließen, so dass der im Klebstoffkörper befindliche Hohlraum von der Umgebung getrennt ist. Wird nun der Klebstoffkörper nach erfolgter Nutzung wieder in Richtung seiner eingefahrenen Position durch entgegengesetzter Drehung des Drehgriffs eingefahren, entsteht in dem Hohlraum ein Überdruck, da die Spindel wieder in den Klebstoffkörper eingeschraubt wird. Der Überdruck in dem Hohlraum kann dabei zu einem Klebstoffabriss führen. Dieser Klebstoffabriss hat zur Folge, dass zwar ein unterer Teil des Klebstoffkörpers wieder in die Hülse zurückgefahren wird, jedoch ein oberer Teil des Klebstoffkörpers, der durch den Klebstoffabriss von dem unteren Teil des Klebstoffkörpers getrennt ist, weiterhin über einen oberen Rand der Hülse hervorsteht. Es ist dabei nicht möglich, danach die Kappe wieder auf die Hülse zu setzen. Zuvor muss der nicht mehr von der Spindel einfahrbare obere Teil per Hand oder durch andere Hilfsmittel in die Hülse gedrückt werden. Dies ist umständlich und steht einer einfachen Handhabung des Klebestifts entgegen. Zudem kann dies für die Haltbarkeit des Klebstoffkörpers und somit des Klebestifts nachteilig sein.

Aus der WO 02/038 003 A1 ist ein Klebestift mit den Merkmalen des Oberbegriffs des Anspruchs 1 bekannt.

Der Erfindung liegt daher die Aufgabe zu Grunde, einen haltbaren Klebestift bereitzustellen, der einfach zu handhaben ist.
Die der Erfindung zu Grunde liegende Aufgabe wird mit der Merkmalskombination gemäß Anspruch 1 gelöst. Ausführungsbeispiele der Erfindung können den Unteransprüchen entnommen werden.
Die Erfindung sieht vor, dass die Spindel an einem Spindelkopf einen Pin aufweist, der sich in Längsachse der Spindel erstreckt und dessen Spitze beim erstmaligen Gebrauch des Klebstifts und in eingefahrener Position des Klebstoffkörpers zu einem oberen Rand des Klebstoffkörpers einen maximalen Abstand von 15 Millimeter (mm) aufweist oder gegenüber dem oberen Rand des Klebstoffkörpers einen maximalen Überstand von einem Millimeter aufweist. Durch den Pin mit der erfindungsgemäßen Beabstandung der Spitze des Pins zum oberen Rand des Klebstoffkörpers werden an der Stirnfläche des Klebstoffkörpers bzw. unmittelbar unterhalb der Stirnfläche Verhältnisse eingestellt, die eine gezielte Rissbildung im Material des Klebstoffkörpers zwischen Stirnfläche und Hohlraum begünstigen, wenn der Klebstoffkörper in einer herausgefahrenen Position (auch Nutzposition genannt) in die eingefahrener Position bewegt wird. Durch die Entstehung von Rissen an der Stirnfläche des Klebstoffkörpers kann sich in dem Hohlraum innerhalb des Klebstoffkörpers kein großer Überdruck aufbauen. Dadurch wird der oben beschriebene Klebstoffabriss vermieden, der den Klebstoffkörper in zwei Teile teilt. Somit kann der Klebstoffkörper, insbesondere auch nach erstmaligem Gebrauch zuverlässig wieder in die eingefahrener Position bewegt werden, bei der sich der Klebstoffkörper vorzugsweise vollständig innerhalb der Hülse des Klebestifts befindet und somit ein Verschließen der Hülse durch die Kappe ohne weiteres möglich ist. Dies erleichtert den Umgang mit dem Klebestift. Der Klebstoffkörper wird somit durch die gezielte Rissbildung zwischen Stirnfläche und Hohlraum vor dem Klebstoffabriss geschützt.

Die erfindungsgemäße Beabstandung umfasst auch einen Bereich, bei dem die Spitze des Pins gegenüber dem oberen Rand des Klebstoffkörpers einen Überstand aufweist. In diesem Fall tritt bei eingefahrener Position des Klebstoffkörpers die Spitze des Pins durch die Stirnfläche des Klebstoffkörpers. Jedoch kann, wenn der Klebstoffkörper in seine Nutzposition gebracht wurde und entsprechend Klebstoff über die Stirnfläche des Klebstoffkörpers auf einer Fläche aufgetragen wurde, die Stirnfläche geschlossen werden, so dass auch in diesem Fall beim Einfahren des Klebstoffkörpers sich ein Überdruck in dem dann innerhalb des Klebstoffkörpers befindlichen Hohlraums einstellen kann.
Durch den Pin wird die Form des Hohlraumes vorgegeben, der beim Herausschrauben der im Klebstoffkörper befindlichen Spindel entsteht. Durch den Pin ist der Hohlraum eher scharfkantig und weist bezogen auf sein Volumen eine große Fläche auf. Die Kontur oder Geometrie des Hohlraums begünstigt die Entstehung von Rissen im Klebstoff. In Kombination mit der oben beschriebenen Beabstandung der Spitze des Pins zum oberen Rand des Klebstoffkörpers entstehen dann schon bei moderaten Überdruck oder Unterdruck Risse, durch die Luft zwischen Hohlraum und Umgebung gelangen kann. Der Abstand nimmt bevorzugt Werte zwischen 0 - 10 Millimeter ein.

Das Verhältnis einer Querschnittsfläche des Pins zu einer Querschnittsfläche der Spindel ist erfindungsgemäss kleiner als 20 Prozent. In einem bevorzugten Ausführungsbeispiel ist dieses Verhältnis kleiner als 10 Prozent. In einer Ausführung, bei der die Spindel ein Außengewinde aufweist, das mit einem Innengewinde des mit einer Bohrung versehenen Kolbens zusammenwirkt, soll sich die Querschnittsfläche der Spindel auf einen Fußdurchmesser beziehen (Querschnittsfläche ohne Gewindeprofil). Sollte der Pin über seine Höhe keine konstante Querschnittsfläche aufweisen, so soll für die Berechnung des Verhältnisses von Querschnittsfläche des Pins zu Querschnittsfläche der Spindel die Querschnittsfläche des Pins zugrundegelegt werden, die der Pin auf mittlerer Höhe aufweist.
Der Pin kann jeden beliebigen Querschnitt aufweisen (zum Beispiel dreieckig, viereckig oder oval). Der Querschnitt kann sich in Form und Größe mit der Höhe des Pins ändern. Der Querschnitt kann aber auch über der Höhe des Pins konstant sein. Vorzugsweise weist der Pin einen runden Querschnitt auf.
Ein Durchmesser des Pins kann 0,1 bis 5 Millimeter (mm) betragen. Vorzugsweise beträgt der Durchmesser 0,5 bis 1,5 Millimeter. Es sind jedoch auch Ausführungen denkbar, die einen Durchmesser von 5 bis 12 Millimeter aufweisen.
In einer Ausführung der Erfindung beträgt eine Höhe des Pins 1 bis 4 Millimeter. Bei einer ausgewählten Ausführung der Erfindung beträgt die Höhe des Pins 2 bis 3 Millimeter.
Zwischen einer Seitenfläche des Pins und einer Stirnfläche des Pins kann ein Rundungsradius vorgesehen sein. Der Rundungsradius beträgt bevorzugt 0 bis 2,5 Millimeter. In einem Ausführungsbeispiel beträgt der Rundungsradius 0,25 bis 0,75 Millimeter.

Der Spindelkopf der Spindel kann pilzförmig ausgebildet sein. Der Spindelkopf kann dabei einen konischen Bereich auf, der gegenüber einem Schaft im Längsschnitt einen radialen Überstand aufweisen kann. Auf der Spitze des Konus ist dann bevorzugt der Pin angeordnet.

Der Pin kann in geeigneter Weise an dem Spindelkopf befestigt sein. Vorzugsweise ist der Pin aber einstückig an dem Spindelkopf angeformt. Ein bevorzugtes Material für Spindel und Pin ist Polypropylen. Es können auch andere Kunststoffe oder andere Materialien verwendet werden.

Anhand der in den Figuren dargestellten Ausführungsbeispiele wird die Erfindung näher erläutert. Es zeigen:
- Figur 1: im Längsschnitt einen Klebestift in einer ersten Ausführung;
- Figur 2: den Klebestift der Figur 1 mit einem leicht herausgefahrenen Klebstoffkörper
- Figur 3: Obere Teile einer Hülse und einer Spindel mit Pin in einer zweiten Ausführung;
- Figur 4: Obere Teile einer Hülse und einer Spindel mit Pin in einer dritten Ausführung;
- Figur 5: Obere Teile einer Hülse und einer Spindel mit Pin in einer vierten Ausführung;

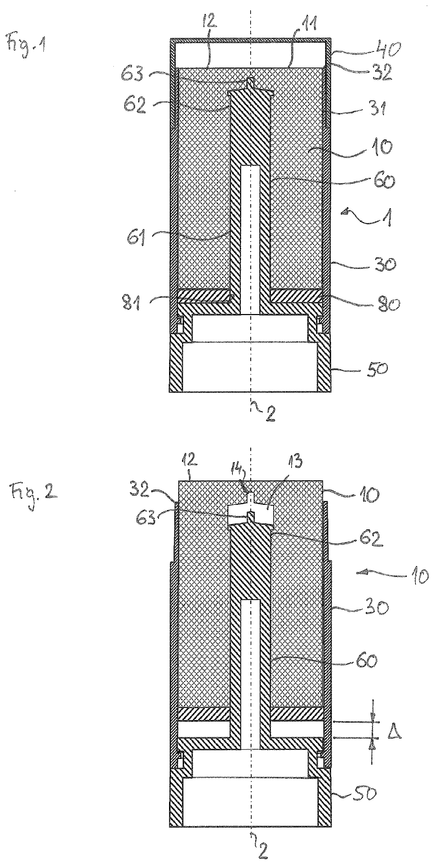

Figur 1 zeigt im Längsschnitt einen im Wesentlich zylindrisch ausgebildeten Klebestift, der in seiner Gesamtheit mit 1 bezeichnet wird. Der Klebestift 1 weist einen Klebstoffkörper 10 auf, der, wie unten noch detaillierter beschrieben wird, entlang einer Längsachse oder Mittelachse 2 verschiebbar angeordnet ist. Der Klebstoffkörper 10 mit zylindrischer Grundform ist in einer Hülse 30 angeordnet. Auf einem oberen Ende 31 der Hülse 30 mit verringerter Wandstärke steckt ein abnehmbarer Deckel 40. Zwischen dem oberen Ende 31 der Hülse 30 und dem Deckel 40 kann eine Rastverbindung vorgesehen sein, die aber in Figur 1 nicht dargestellt ist.

In axialer Richtung abgewandt vom oberen Ende 31 der Hülse 30 ist ein Drehgriff 50 angeordnet, der einstückig mit einer Spindel 60 ausgebildet ist. Die Spindel 60 weist einen teilweise hohlen Schaft 61 und einen Spindelkopf 62 auf. An dem Spindelkopf 62 weist die Spindel 60 einen kleinen Stift oder Pin 63 auf. Der Pin 63 erstreckt sich in Richtung der Längsachse 2. Die Mittelachse des Pins fällt mit der Längsachse 2 zusammen.

Der Schaft 61 der Spindel 60 ist mit einem Außengewinde versehen, welches jedoch in Figur 1 nicht dargestellt ist. Das Außengewinde der Spindel 60 wirkt mit einem Kolben 80 zusammen, der eine zentrale Bohrung 81 mit einem ebenfalls nicht dargestellten Innengewinde aufweist. Das Innengewinde des Kolbens 80 und das Außengewinde der Spindel 60 wirken derart zusammen, dass bei Drehung des Drehgriffs 50 und somit der mit dem Drehgriff 50 drehfest verbundenen Spindel 60 der Kolben 80 entlang der Längsachse 2 bewegt wird. Der Kolben 80 drückt dabei den in der Darstellung der Figur 1 oberhalb des Kolbens 80 angeordneten Klebstoffkörper 10 entlang der Längsachse 2 nach oben. Umgekehrt, wenn also der Drehgriff in entgegen gesetzte Richtung gedreht wird, sorgt das Zusammenspiel von Außengewinde der Spindel 60 und in einem in den Klebstoffkörper 60 geschnittenen Innengewinde (ebenfalls nicht dargestellt) dafür, dass der Klebstoffkörper 60 axial in Richtung des Drehgriffs bewegt wird.

Figur 1 gezeigt den Klebstoffkörper 10 in einer eingefahrenen (End-)Position. In dieser eingefahrenen Position schließt ein oberer Rand 11 des Klebstoffkörpers 10 bündig mit einem oberen Rand 32 der Hülse 30 ab. Der obere Rand 11 des Klebstoffkörpers 10 liegt in einer Ebene, in der eine Stirnfläche 12 des Klebstoffkörpers 10 liegt.

Figur 2 zeigt den Klebestift der Figur 1, wobei gegenüber der Figur 1 der Klebstoffkörper 10 um einen bestimmten Weg oder Hub Δ entlang der Längsachse 2 in der Darstellung der Figur 2 nach oben verschoben ist. In Figur 2 werden Bauteile oder Merkmale, die zu denen der Figur 1 ähnlich oder identisch sind, mit gleichen Bezugszeichen versehen. Analoges gilt auch für die folgenden Figuren.

Aufgrund der axialen Verschiebung des Klebstoffkörpers 10 zur Spindel 60, die zwar zur feststehenden Hülse 30 drehbar angeordnet ist, aber deren axiale Position bezogen zur Hülse 30 festgelegt ist, entsteht oberhalb des Spindelkopfs 62 ein Hohlraum 13, den der Spindelkopf 62 bzw. der Pin 63 freigibt, wenn der Klebstoffkörper 10 aus der eingefahrenen Position herausbewegt wird. In dem Hohlraum 13 entsteht beim Herausfahren des Klebstoffkörpers 10 ein Unterdruck, der mit größer werdendem Volumen des Hohlraums 13 ansteigt. Dieser Unterdruck wirkt dem Herausfahren des Klebstoffkörpers 10 entgegen. Übersteigt der Unterdruck in dem Hohlraum eine gewisse Grenze (oder unterschreitet der Druck im Hohlraum einen gewissen Druckwert), kommt es zur Rissbildung in dem Klebstoffkörper 10, so dass Luft von der Umgebung in den Hohlraum 13 gelangen kann, um den Druckunterschied zwischen Umgebung und Hohlraum 13 auszugleichen. Ein derartiger Riss ist in Figur 2 skizziert und mit 14 bezeichnet.

In der in Figur 2 dargestellten Position (Nutzposition) des Klebstoffkörpers 10 kann der Klebestift 1 zum Auftrag von Klebstoff beispielsweise auf ein Blatt Papier verwendet werden. Dabei kann die Stirnfläche 12 des Klebstoffkörpers 10 über das Papier gestrichen werden. Das Streichen der Stirnfläche 12 entlang des Papiers kann dazu führen, dass sich der Riss 14 wieder schließt. Wird nach erfolgtem Auftragen des Klebstoffes der Klebstoffkörper 10 wieder in die Hülse 30 eingefahren, um den Klebstift 1 dann nach erfolgtem Aufstecken des Deckels 40 (der in Figur 2 nicht dargestelltes) dann zwecks Aufbewahrung beiseite zu legen, kann die im Hohlraum befindliche Luft 13 nicht entweichen, wenn der Drehgriff 50 gedreht wird und somit der Hohlraum 13 zwischen Spindel 60 und Klebstoffkörper 10 kleiner wird. Aufgrund der besonderen Kontur des Hohlraums 13, die insbesondere durch den Pin 63 bedingt ist, kommt es beim Hereinfahren des Klebstoffkörpers 10 in die Hülse 30 wieder zu einer gezielten Rissbildung zwischen Hohlraum 13 und der Stirnfläche 12, so dass ein Druckausgleich zwischen Hohlraum 13 und Umgebung stattfinden kann. Dadurch kann vermieden werden, dass durch den Hohlraum 13 herrschenden Überdruck sich ein oberer Teil des Klebstoffkörpers 10 von einem unteren Teil des Klebstoffkörpers 10 trennt (Klebstoffabriss). In diesem Fall besteht die Gefahr, dass über die Spindel 60 nur der untere Teil des Klebstoffkörpers 10 in die Hülse bewegt wird, während der obere Teil des Klebstoffkörpers 10 weiterhin über den oberen Rand 32 der Hülse 30 hervorsteht. Je nach Ausmaß, wie weit der obere Teil des Klebstoffkörpers 10 über dem oberen Rand 32 der Hülse 30 hervorsteht, kann ein Aufsetzen des Deckels 40 auf die Hülse 30 problematisch sein. Auch kann es sein, dass der abgerissene obere Teil des Klebstoffkörpers 10 sich vollständig vom Klebestift 1 löst und damit verloren geht.

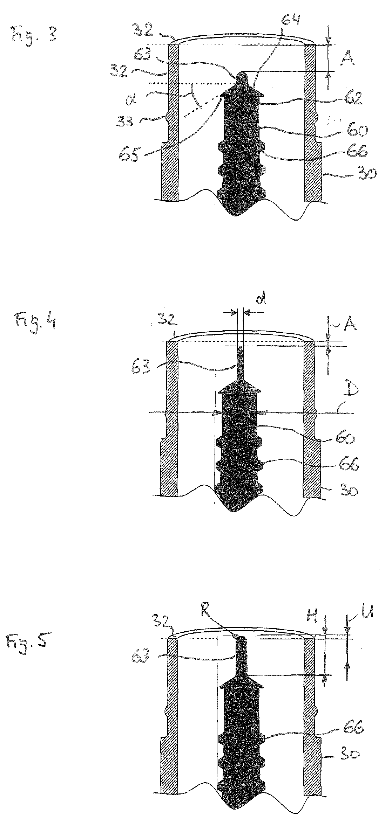

Die Figuren 3 bis 5 zeigen weitere Ausführungen für die Spindel 60 mit dem Pin 63. Dargestellt sind jeweils ein oberer Teil der Spindel 60 sowie ein oberer Teil der Hülse 30.

In Figur 3 ist ein Abstand A zwischen der Spitze des Pins 63 und dem oberen Rand 32 der Hülse 30 eingezeichnet. Unter der Annahme, dass der obere Rand 11 des Klebstoffkörpers 10 in eingefahrener Position in der gleichen Ebene liegt wie der oberen Rand 32 der Hülse 30 (wie dies im Ausführungsbeispiel der Figur 1 der Fall ist), beträgt der Abstand A erfindungsgemäß maximal 15 Millimeter. In einem bevorzugten Ausführungsbeispiel beträgt der Abstand A 2 bis 10 Millimeter bzw. 4 bis 6 Millimeter.

Der Spindelkopf 62 der Figur 3 ist pilzförmig ausgebildet und weist einen konischen Bereich 64 mit einem Kegelwinkel α auf. Der Wertebereich für den Kegelwinkel α kann sich von 0 bis 40 Grad (bevorzugt 20 bis 30 Grad) erstrecken. Auf der Spitze des konischen Bereichs 64 ist mittig der Pin 63 angeordnet.

Der konische Bereich 64 bildet einen radialen Überstand 65 aus. Der radialen Überstand kann 0,1 bis 1,5 Millimeter betragen.

Im Gegensatz zu den Figuren 1 und 2 ist in den Figuren 3 bis 5 ein umlaufender Rastnocken 33 am oberen Ende 32 der Hülse 30 dargestellt, der Teil der Rastverbindung zwischen Hülse 30 und dem in den Figuren 3 bis 5 nicht dargestellten Deckel 40 ist. Auch ist in den Figuren 3 bis 5 das oben bereits erwähnte Außengewinde der Spindel 60 dargestellt, wobei das Außengewinde mit 66 bezeichnet wird.

Gegenüber dem Ausführungsbeispiel der Figur 3 ist der Abstand A im Ausführungsbeispiel der Figur 4 deutlich kleiner. Auch unterscheidet sich die Form des Pins 63 der Figur 4 deutlich von der Form des Pins der Figur 3. Ein Durchmesser d des Pins 63 beträgt bezogen auf einen Fußdurchmesser D der Spindel 60 rund 20 Prozent. Das Verhältnis d/D kann Werte zwischen 10 und 30 Prozent annehmen, wodurch sich ein Verhältnis der Querschnittsfläche des Pins 63 zur Querschnittsfläche der Spindel 60 (unter Zugrundelegung des Fußdurchmessers D) von 1 bis 9 Prozent ergeben.

Figur 5 zeigt ein Ausführungsbeispiel, bei dem zwischen der Spitze des Pins 63 und dem oberen Rand 32 der Hülse 30 ein Überstand U gegeben ist. Wenn auch hier wieder angenommen wird, dass in eingefahrener Position der Klebstoffkörper 10 bündig mit der Hülse 30 abschließt, schaut in eingefahrener Position des Klebstoffkörpers 10 die Spitze des Pins 63 aus dem Klebstoffkörper 10.

In Figur 5 ist auch die Höhe des Pins 63 eingezeichnet. Sie ist mit H bezeichnet und kann Werte von 1 bis 4 Millimeter annehmen. Zu dem ist in Figur 5 ein Rundungsradius mit R bezeichnet. Durch den Rundungsradius R wird der Übergang von der Seiten- oder Mantelfläche zur Stirnfläche des Pins 63 geprägt. Im Grenzfall kann der Rundungsradius R der Hälfte des Durchmessers d des Pins 63 entsprechen, so dass sich eine halbkugelförmige Spitze des Pins 63 ausbildet.

### Bezugszeichenliste

- 1: Klebestift
- 2: Längsachse

- 10: Klebstoffkörper
- 11: Obere Rand
- 12: Stirnfläche
- 13: Hohlraum
- 14: Riss

- 30: Hülse
- 31: Oberes Ende
- 32: Oberer Rand
- 33: Rastnocken

- 40: Deckel

- 50: Drehgriff

- 60: Spindel
- 61: Schaft
- 62: Spindelkopf
- 63: Pin
- 64: Konischer Bereich
- 65: Radialer Überstand
- 66: Außengewinde

- 80: Kolben
- 81: Bohrung

## Patentansprüche

1. Klebestift (1) mit einem Klebstoffkörper (10), einem Drehgriff (50) mit Spindel (60), einem Kolben (80), der mit der Spindel (60) in Eingriff steht und dazu dient, bei Drehung des Drehgriffs (50) den Klebstoffkörper (10) aus einer eingefahrenen Position zu drucken, wobei die Spindel (60) an einem Spindelkopf (62) einen Pin (63) aufweist, der sich in Längsachse der Spindel (60) erstreckt **dadurch gekennzeichnet, dass** dessen Spitze beim erstmaligen Gebrauch des Klebestifts und in eingefahrener Position des Klebstoffkörpers zu einem oberen Rand (11) des Klebstoffkörpers (10) einen maximalen Abstand von 15 mm aufweist oder gegenüber dem oberen Rand des Klebstoffkörpers einen maximalen Überstand von 1 mm aufweist und dass das Verhältnis einer Querschnittsfläche des Pins (63) zu einer Querschnittsfläche der Spindel (60) kleiner als 20 % ist.

2. Klebstift (1) nach Anspruch 1, **dadurch gekennzeichnet, dass** der Pin (63) einen runden Querschnitt aufweist.

3. Klebstift (1) nach Anspruch 2, **dadurch gekennzeichnet, dass** ein Durchmesser des Pins 0,1 mm bis 5 mm beträgt.

4. Klebstift (1) nach einem der Ansprüche 1 bis 3, **dadurch gekennzeichnet, dass** eine Höhe des Pins (63) 1 bis 4 mm beträgt.

5. Klebstift (1) nach einem der Ansprüche 1 bis 4, **dadurch gekennzeichnet, dass** ein Rundungsradius zwischen einer Seitenfläche des Pins und einer Stirnfläche des Pins (63) 0 bis 2,5 mm beträgt.

6. Klebstift (1) nach einem der Ansprüche 1 bis 5, **dadurch gekennzeichnet, dass** der Spindelkopf (62) pilzförmig ist.

7. Klebstift (1) nach einem der Ansprüche 1 bis 6, **dadurch gekennzeichnet, dass** der Pin (63) einstückig an dem Spindelkopf (62) angeformt ist.

8. Klebstift (1) nach einem der Ansprüche 1 bis 7, **dadurch gekennzeichnet, dass** der Pin (63) aus Polypropylen (PP) ist.

## Claims

1. An adhesive stick (1) comprising an adhesive body (10), a turning handle (50) comprising a spindle (60), a piston (80) which is engaged with the spindle (60) and is used to push the adhesive body (10) out of a retracted position when the turning handle (50) is turned, the spindle (60) having a pin (63) on a spindle head (62), which pin extends in the longitudinal axis of the spindle (60), **characterized in that**
the tip of said pin, when the adhesive stick is first used and the adhesive body is in the retracted position, is at a maximum distance of 15 mm from an upper edge (11) of the adhesive body (10) or projects beyond the upper edge of the adhesive body by a maximum overhang of 1 mm and **in that** the ratio of a cross-sectional area of the pin (63) to a cross-sectional area of the spindle (60) is less than 20%.

2. The adhesive stick (1) according to claim 1, **characterized in that** the pin (63) has a circular cross section.

3. The adhesive stick (1) according to claim 2, **characterized in that** a diameter of the pin is from 0.1 mm to 5 mm.

4. The adhesive stick (1) according to one of claims 1 to 3, **characterized in that** a height of the pin (63) is from 1 to 4 mm.

5. The adhesive stick (1) according to one of claims 1 to 4, **characterized in that** a curvature radius between a lateral surface of the pin and an end surface of the pin (63) is from 0 to 2.5 mm.

6. The adhesive stick (1) according to one of claims 1 to 5, **characterized in that** the spindle head (62) is mushroom-shaped.

7. The adhesive stick (1) according to one of claims 1 to 6, **characterized in that** the pin (63) is integrally formed on the spindle head (62).

8. The adhesive stick (1) according to one of claims 1 to 7, **characterized in that** the pin (63) is made of polypropylene (PP).

## Revendications

1. Bâton de colle (1) comprenant un corps adhésif (10), une poignée rotative (50) pourvue d'une broche (60), un piston (80) qui est en engagement avec la broche (60) et qui sert, lors de la rotation de la poignée rotative (50), à presser le corps adhésif (10) hors d'une position rentrée, la broche (60) comportant sur une tête de broche (62) un ergot (63) qui s'étend dans l'axe longitudinal de la broche (60), **caractérisé en ce que**,
lors de la première utilisation du bâton de colle et dans la position rentrée du corps adhésif (10), la pointe du bâton de colle se trouve par rapport au bord supérieur (11) du corps adhésif (10) à une distance maximale de 15 mm ou présente par rapport au bord supérieur du corps adhésif une projection maximale de 1 mm, et **en ce que**
le rapport d'une surface en coupe transversale de l'ergot (63) à une surface en coupe transversale de la broche (60) est inférieur à 20 %.

2. Bâton de colle (1) selon la revendication 1, **caractérisé en ce que** l'ergot (63) a une section transversale ronde.

3. Bâton de colle (1) selon la revendication 2, **caractérisé en ce que** le diamètre de l'ergot est compris entre 0,1 mm et 5 mm.

4. Bâton de colle (1) selon l'une des revendications 1 à 3, **caractérisé en ce que** 'une la hauteur de l'ergot (63) va de 1 à 4 mm.

5. Bâton de colle (1) selon l'une des revendications 1 à 4, **caractérisé en ce que** le rayon d'arrondi entre une surface latérale de l'ergot et une surface frontale de l'ergot (63) va de 0 à 2,5 mm.

6. Bâton de colle (1) selon l'une des revendications 1 à 5, **caractérisé en ce que** la tête de broche (62) est en forme de champignon.

7. Bâton de colle (1) selon l'une des revendications 1 à 6, **caractérisé en ce que** l'ergot (63) est formé d'une seule pièce sur la tête de broche (62).

8. Bâton de colle (1) selon l'une des revendications 1 à 7, **caractérisé en ce que** l'ergot (63) est en polypropylène (PP).
